# EUROPEAN PATENT SPECIFICATION

(11) **EP 4 020 406 B1**
(45) Date of publication and mention of the grant of the patent: **06.05.2026**
(21) Application number: 21197713.7
(22) Date of filing: 20.09.2021
(51) Int. Cl.: G06N 3/0464, G06V 20/56, G06V 20/58, G06V 10/98

(54) **VEHICLE-BASED MEASUREMENT OF SIGNAL OBJECT INTEGRITY**
FAHRZEUGBASIERTE MESSUNG DER INTEGRITÄT VON SIGNALOBJEKTEN
MESURE DE L'INTÉGRITÉ D'UN OBJET DE SIGNAL BASÉE SUR UN VÉHICULE

(30) Priority: 22.12.2020 US 202017131537
(43) Date of publication of application: 29.06.2022
(73) Proprietor: INTEL Corporation, Santa Clara, CA 95054 (US)
(72) Inventor: POHL, Daniel, 91093 Hessdorf (DE); TANRIOVER, Cagri, Portland, 97229 (US); ALVAREZ, Ignacio J., Portland, 97229 (US); FOX, Maik, 76287 Rheinstetten (DE)
(74) Representative: Viering, Jentschura & Partner mbB Patent- und Rechtsanwälte

(56) References cited:
- GUO JINGDA ET AL: "Detection of Occluded Road Signs on Autonomous Driving Vehicles", 2019 IEEE INTERNATIONAL CONFERENCE ON MULTIMEDIA AND EXPO (ICME), IEEE, 8 July 2019 (2019-07-08), pages 856 - 861, XP033590297, DOI: 10.1109/ICME.2019.00152
- HIENONEN PETRI ET AL: "Image Analysis : 20th Scandinavian Conference, SCIA 2017, Troms�, Norway, June 12-14, 2017, Proceedings, Part I", 19 May 2017 (2017-05-19), Cham, pages 197 - 208, XP055901895, ISBN: 978-3-319-59125-4, Retrieved from the Internet <URL:https://link.springer.com/content/pdf/10.1007/978-3-319-59126-1_17.pdf> [retrieved on 20220316], DOI: 10.1007/978-3-319-59126-1
- FOLLOW MAPBOX - ET AL: "Fast traffic sign mapping with OpenStreetMap and Mapillary", 31 July 2017 (2017-07-31), XP093210936, Retrieved from the Internet <URL:https://blog.mapbox.com/fast-traffic-sign-mapping-with-openstreetmap-and-mapillary-9914943460fc> [retrieved on 20241002]

## Description

### TECHNICAL FIELD

Embodiments described herein generally relate to automated vehicle sensing and more specifically to vehicle-based measurement of signal object integrity.

### BACKGROUND

Automated vehicles include technologies to perform autonomous or semi-autonomous travel, often referred to as "self-driving" or "assisted-driving" in reference to automobiles. These systems use an array of sensors to continuously observe the vehicle's motion and surroundings. A variety of sensor technologies may be used to observe the vehicle's surroundings, such as the road surface and boundaries, other vehicles, pedestrians, objects and hazards, signal objects (e.g., signage or road markings), and other relevant items. Automated vehicles also generally include processing circuitry to process the sensor data and may include actuators to control a vehicle.

Image-capture sensors that are implemented with one or more cameras are particularly useful for object detection and recognition, such as reading signal objects like signs (e.g., stop signs, speed limits signs, street signs, etc.) or road markings (e.g., dividing lines, turn arrows, etc.). Such image capture sensors generally cover several fields of view (FOV) around the vehicle.

Relevant prior art includes:
J. Guo et al., Detection of Occluded Road Signs on Autonomous Driving Vehicles, 2019 IEEE International Conference on Multimedia and Expo (ICME), Shanghai, China, 2019, pp. 856-861, doi: 10.1109/ICME.2019.00152, relating to the detection of occluded road signs from autonomous driving vehicles;
P. Hienonen et al., Framework for Machine Vision Based Traffic Sign Inventory, In: Sharma, P., Bianchi, F. (eds) Image Analysis, SCIA 2017, Lecture Notes in Computer Science, vol 10269, relating to the detection of traffic signs and assessing the condition of the recognized signs.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates an example of an environment including a vehicle with a system for vehicle-based measurement of signal object integrity, according to an embodiment.
FIG. 2 illustrates an example of a vehicle with a system for vehicle-based measurement of signal object integrity, according to an embodiment.
FIG. 3. Illustrates several signal-object integrity scenarios and corresponding communications from a vehicle, according to an embodiment.
FIG. 4 illustrates a flow diagram of an example of a method for vehicle-based measurement of signal object integrity, according to an embodiment.
FIG. 5 is a block diagram illustrating an example of a machine upon which one or more embodiments may be implemented.

### DETAILED DESCRIPTION

Signal objects are often important to provide effective communication of roadway traffic flow and navigation, increasing safety concerns in an increasing traffic flow on roadways. However, because signal objects are physical objects, signal objects may be damaged over time. Even if the signal object itself is undamaged, its ability to perform its signal function may be damaged, as occurs when a stop sign is hidden behind foliage. Due to the usually large number of signal objects, detecting when signal object integrity is too low can be a challenge. Thus, safety or efficiency of roadways may be compromised.

Current attempts to address signal object integrity monitoring often involve reporting by the public to an entity responsible for the signal object (e.g., citizen complaints to a city), observation after an incident has occurred (e.g., a traffic collision), or refurbishment to an area of roadway for other reasons. These activities are generally labor intensive and unpredictable, with some (such as post-collision analysis) being untimely.

The prevalence of semi-autonomous automated vehicles, and the emergence of fully autonomous automated vehicles, provides an opportunity to address current issues with signal object integrity measurement. Instead of manually checking signal objects to determine whether signal integrity is acceptable, automated vehicles may be used to detect and report such issues. Automated vehicles generally include some facility for recognizing signal objects. This facility may be extended to identify damage in signal objects, prioritize signal objects, and communicate the results. For example, signal object maintenance may be prioritized based on the recognition confidence crowdsourced from several automated vehicles over time. Further, map data (e.g., high-definition or high-resolution maps) may be compared to automated vehicle observations to recognize signal objects. If there are discrepancies-e.g., because a sign is damaged or missing-a report may be automatically generated and communicated to a data consumer (e.g., a city or maintainer of the signal object) to ensure faster maintenance for signal objects. Such improved maintenance may avoid costly inefficiencies in roadway use or increase safety. Additional details and examples are described below.

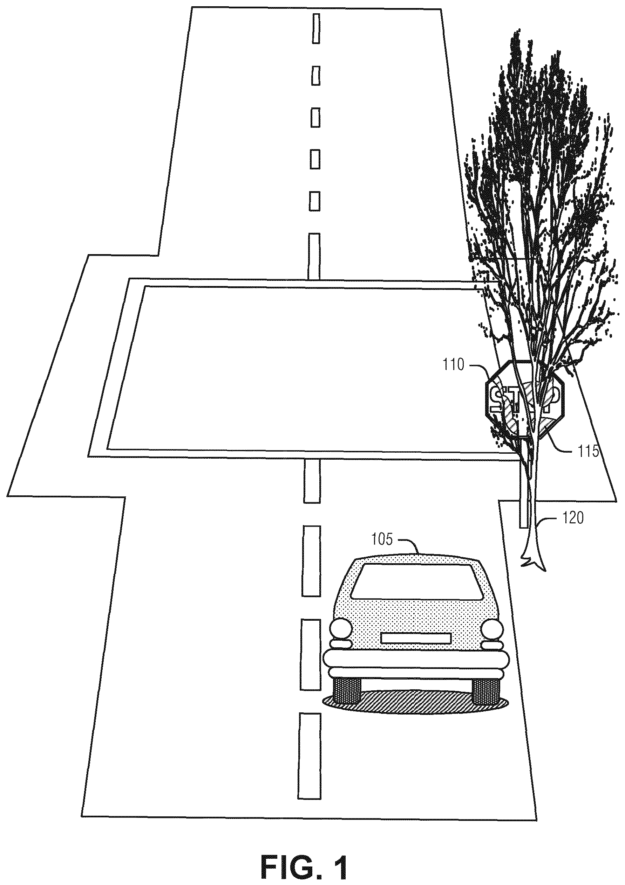

FIG. 1 illustrates an example of an environment including a vehicle 105 with a system for vehicle-based measurement of signal object integrity, according to an embodiment. The vehicle 105 is an automated vehicle with a set of sensors, processing circuitry, and a transceiver (e.g., transmitter and receiver) to wirelessly communicate with other entities. The set of sensors include a visible light camera to capture images of the environment about the vehicle 105. The set of sensors may include lidar, radar, or sound-based sensors as well.

The processing circuitry includes an interface to obtain (e.g., retrieve or receive) sensor data from the set of sensors. Generally, the processing circuitry is configured to identify a signal object, such as the signal object 110, from the sensor data. Such identification may incorporate many techniques. For example, the processing circuitry may be configured to implement an artificial neural network (ANN) that accepts images from a camera and provides output of, for example, a bounding box around the signal object pixels as well as a label classifying the signal object 110 as a stop sign. In an example, the signal object is a sign, light signal, or road surface marking.

As illustrated, the integrity of the signal object is compromised in two ways. First, the signal object is obscured by the tree 120. Second, the signal object includes areas 115 in which the signal is removed (e.g., a surface treatment has worn away) or covered (e.g., by graffiti). In this context, the processing circuitry is configured to obtain sensor data from the set of sensors and also to obtain a bound for the signal object 110. Here, the bound acts to filter the sensor data over which future analysis will be carried out. The bound may come from, for example, a shape recognition process to identify pixels in an image that fall within an outline of a signal object shape, a usual position of a signal object, etc. In an example, the bound may be provided from map data, indicating the presence of the signal object 110 at a particular location. Taking the bound from a recognition process already in use by the vehicle 105 helps to reduce processing to recognize the signal object 110. However, if the signal object 110 is missing entirely, or completely obscured by the tree 120, for example, the standard recognition process is unlikely to provide the bound. In this scenario, using the map data to provide the bound helps to ensure an accurate measurement of the signal object's integrity.

The processing circuitry is configured to invoke a classifier for the signal object. In an example, the classifier may be invoked based on the bound, such as that provided by the map data or sensor preprocessing to filter areas that aren't relevant (e.g., not looking for yield signs in the sky). In any case, the classifier is attempting to recognize the signal object 110. The result (e.g., output) from the classifier may indicate that there is a problem with the signal object 110. For example, if the map data indicates the presence of a stoplight, but the classifier does not include a stoplight in the output, then a problem is indicated with the stoplight. In an example, the result indicates that there is a problem with the signal object in response to a confidence score to recognize the signal object is below a threshold. This example is particularly relevant to systems, such as ANNs, that provide confidence scores with classifications. Thus, although the signal object 110 is recognized, recognition may be below a threshold confidence level (e.g., sixty percent), indicating a problem with the signal object.

Although the standard classifier output may indicate an integrity issue with the signal object 110, such classifiers are generally not capable of providing details as to the problem. Thus, in an example, a second classifier is invoked on the bound for the sensor data to determine a type of damage to a signal ability of the signal object 110. Here, signal ability refers to the ability of the signal object to provide the intended signal. For example, when the tree 120 obscures the stop sign signal object 110, the stop sign need not be in ill repair. Thus, replacing the signal object 110 will not resolve the damage to the signal ability of the signal object 110. Rather, the tree 120 must be dealt with. However, damaging the physical structure of the signal object 110, such as the markings 115, also damages the signal ability.

The output of the second classifier may include a degree of damage to the signal ability, a type of damage to the signal ability, or both. The degree of damage metric may be useful in prioritizing the repair of several signal objects. The type of damage may be useful in determining what type of remediation is needed. In an example, the damage is at least one of occlusion, deformation, degradation of surface markings, absence or surface markings, or additional markings. Thus, in the case of occlusion, removal of the occluding object (such as the tree 120) would be an effective remediation. In the case of deformation, a new signal object may be needed. In the case of missing or degraded markings, a new object (in the case of a sign) may be needed, or new paint or tape (in the case of markings applied to a road surface) may be needed. And in the case of new markings, or some occlusions, a cleaning may be in order. Providing the degree or type of damage enables a maintainer of the signal object 110 to marshal limited resources to provide the greatest impact in signal object maintenance.

The processing circuitry is configured to communicate, using the transceiver, a representation of the classifier result. The representation of the classifier result may be the raw data from the result, or the result may be modified (curated) to make it more compact to store, more efficient to transmit, or more useful to the data consumer. The communication may be to a cloud or edge server, to another vehicle, or other entity subscribing to signal object integrity measurements.

In an example, the representation of the result includes a representation of the bound with respect to the sensor data. Here, this representation of the bound may be coordinates of the bound within the sensor data (e.g., relevant pixels in an image), coordinates in a map, or other demarcations of the signal object 110 in the sensor data.

In an example, the representation of the result includes a type of signal object detected. Thus, if a stop sign is detected, the representation of the result will include a field indicating "stop sign," although a symbol or dictionary index may be used instead of a word label for the field contents.

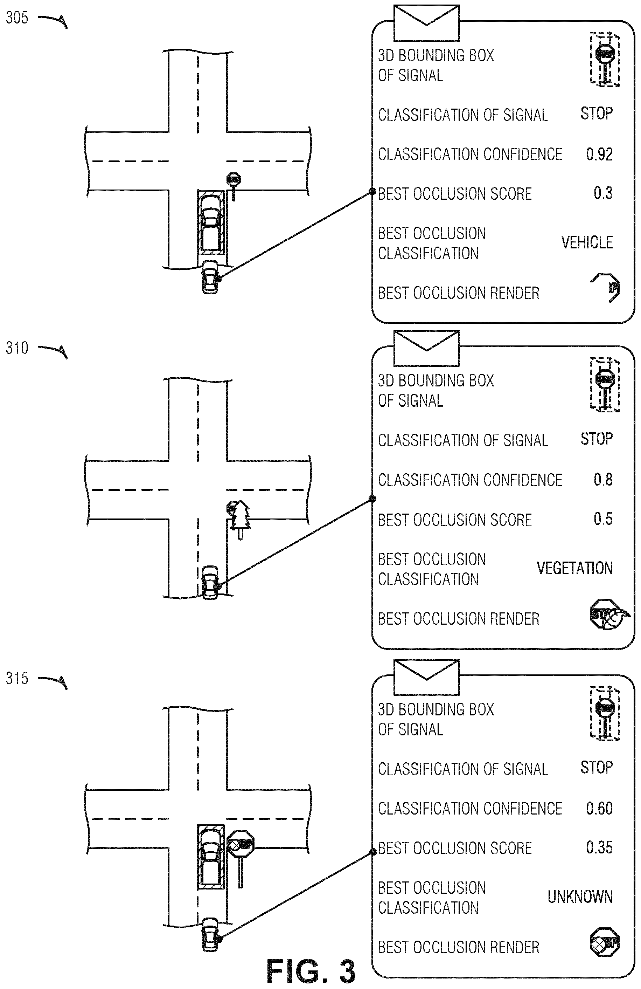

In an example, the representation of the result includes a confidence score (e.g., from the first classifier) for the signal object detected. FIG. 3 illustrates several messages that include various representations of the result.

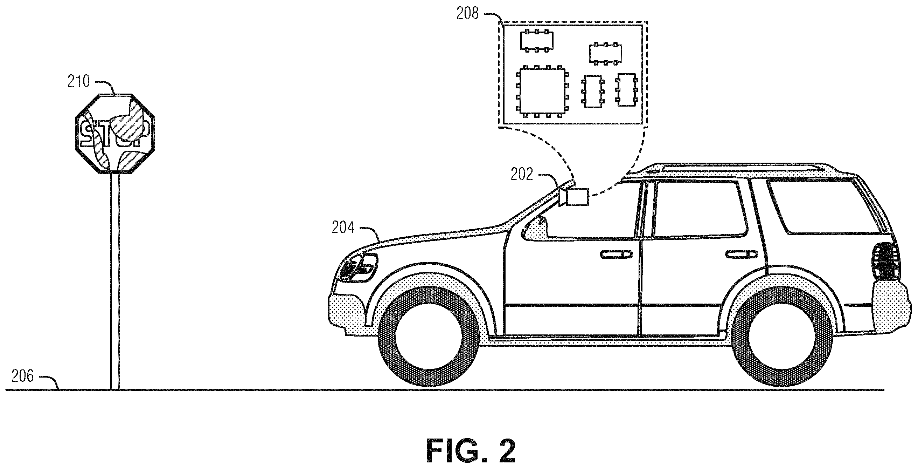

FIG. 2 illustrates an example of a vehicle 204 with a system for vehicle-based measurement of signal object integrity, according to an embodiment. The illustration in FIG. 2 is another perspective of aspects of that illustrated in FIG. 1 and described above. Here, the camera 202 is a vehicle sensor that includes the processing circuitry 208 to perform recognition of the signal object 210, as well as measure the integrity of the signal ability of the signal object 210 as the vehicle 204 operates on the roadway 206.

In this context, and as noted above, today, the maintenance of signal objects, such as traffic signs, is performed by people. Often, if signal objects are damaged or dirty, the problem goes unnoticed for a long time, such as until the next routine maintenance cycle in the area, or a report by concerned citizens or the police is made. In the case where a signal object is completely missing, the absence may not be noticed for an even longer time. However, using automated vehicles, such as the vehicle 204, to measure the integrity of signal objects, the time between a loss in signal ability and remediation may be greatly reduced.

Consider the following situation: the vehicle approaches a position on the roadway 206 that high-resolution maps indicate should have a stop sign signal object 210; however, the vehicle 204 only detects some object in that exact position and cannot read it. This should be reported into the cloud as an incident with a description of what was expected, what was seen, and from which position or camera images this happened.

It could be that in such a case, something is just wrong with the cameras 202 of the vehicle 204, so just by a single report of such an incident a smart city recipient of the report would not react. However, if multiple vehicles report that they cannot fully read the sign 210, the problem may be considered relevant and forwarded to city officials to act.

In general, the vehicle 204 checks on high-definition map region of interest where traffic signs 210 within perception range are located. The vehicle 204 performs classification of traffic sign 210 including location and position of signal bounding box, classification of type of signal, or confidence scores on the signal type. In an example, the vehicle 204 may include an occlusion score within the period of time where the signal object 210 was visible to the vehicle 204.

If the signal object 210 cannot be classified, or certain classification parameter thresholds are met-such as an occlusion score above certain value, an unknown object occluding the signal object 210, etc.-a report is made (e.g., to the cloud) as a single incident. To reduce communication (e.g., transmission bandwidth) requirements, notifications may be suppressed unless there is a complete failure to recognize the signal object 210, or the confidence of the recognition is below a threshold (e.g., ten percent). In an example, an authority (e.g., a municipality) may request a "heart-beat" service where a fleet of vehicles, including the vehicle 204, perform at least one measurement per period of time (e.g., once an hour, day, month, etc.). If cloud (or other data aggregator or collector) collects beyond a threshold number (e.g., more than ten) such incidents on a certain signal object 210, the city is notified that the integrity of the signal object 210 is compromised. Capturing multiple reports with multiple levels of confidence level will also help build probability distributions over time that will help to prioritize which groups of problematic signal objects need to be addressed. For example, the municipality may prioritize the maintenance of signs with recognition confidence values at or below twenty percent with a standard deviation that is less than one percent compared to the maintenance of signs with a thirty percent confidence level and ten percent standard deviation because the former is likely to be more problematic for people using the roadway.

The description above may be extended to encompass evaluating objects or than signal objects in a smart city context. For example, city officials may plan precise locations for public trash cans, public mailboxes, and so on. The same techniques (e.g., obtain sensor data, a bound, classification, and report) may be applied in these extended circumstances, including providing a confidence value, missing detection, etc., to produce regular reports. These reports may be used for a data base of several city-owned properties or utilities. Automated vehicles other than the illustrated automobile, may also be used, such as aircraft (e.g., drones or unmanned aerial vehicles (UAVs)), watercraft, etc. Drones may be more maneuverable and suitable in terms of size compared to terrestrial autonomous vehicle alternatives in some circumstances.

FIG. 3. Illustrates several signal-object integrity scenarios and corresponding communications from a vehicle, according to an embodiment. Three signal object integrity measurement scenarios are illustrated, along with corresponding reports. The reports include the following information:
1. A bound (e.g., bounding box (x,y,z) location or dimensions (w,l,h)).
2. A classification of the signal object (e.g., STOP sign).
3. Confidence score of the signal object classification. This may be normalized (e.g., real number values between zero and one)
4. A score indicating the degree of damage to a signal ability of the signal object (e.g., occlusion score). This may be normalized (e.g., real number values between zero and one)
5. A classification of the type of damage to the signal ability (e.g., occlusion classification).
6. A sensor snippet (e.g., an image) of the damage. This may be useful for a maintenance team assessing remedial actions or prioritizing repairs, as well as producing training data for either the signal object classifier, or damage classifier described above.
Although not shown, the report may also include an orientation of signal object. This may be useful to assess, for example, a street sign struck by a vehicle such that it is out-of-position with respect to its audience.

Scenario 305 illustrates an occlusion by another vehicle. With respect to the trailing vehicle, the stop sign is as unreadable as if the stop-sign were covered in paint. However, the occlusion classification and the occlusion render may be used to determine that no remedial action is necessary.

Scenario 310 illustrates occlusion by foliage. Here, no action need be taken with respect to the stop sign. Rather, the tree needs to be trimmed to restore the signal ability of the stop sign with respect to the vehicle.

Scenario 315 illustrates occlusion by damage to the signal object. Here, the signal object will likely need to be replaced. Replacing a signal object on a roadway, may include adding paint or tape to the roadway.

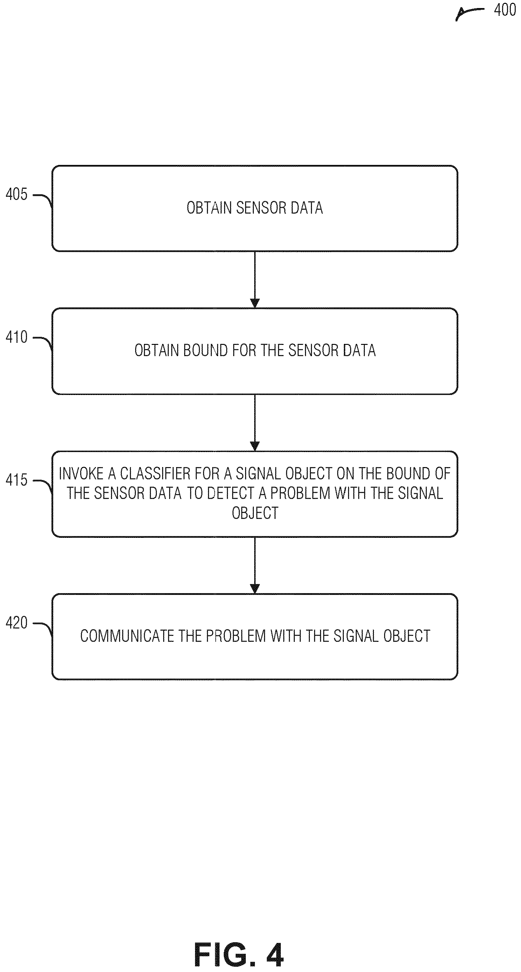

FIG. 4 illustrates a flow diagram of an example of a method 400 for vehicle-based measurement of signal object integrity, according to an embodiment. The operations of the method 400 are performed by computing hardware, such as that described above with respect to FIGS. 1-2 and below (e.g., processing circuitry).

At operation 405, sensor data of an environment of the vehicle is obtained. In an example, the sensor data originates from a sensor mounted to the vehicle.

At operation 410, a bound for the sensor data is obtained. Here, the bound corresponds to a signal object. In an example, the signal object is a sign, light signal, or road surface marking. In an example, the sign is a stop sign, a yield sign, a speed limit sign, a street sign, or an exit sign. In an example, the bound for the sensor data is obtained from a map provided to the vehicle. Here, the map indicates a position of the signal object.

At operation 415, a classifier for the signal object is invoked with the sensor data based on the bound. The result may indicate that there is a problem with the signal object. In an example, the result indicates that there is a problem with the signal object in response to a confidence score to recognize the signal object is below a threshold.

In an example, a second classifier is invoked on the bound for the sensor data to determine a type of damage to a signal ability of the signal object. In an example, the second classifier also determines a degree of the damage. In an example, the damage is at least one of occlusion, deformation, degradation of surface markings, absence or surface markings, or additional markings

At operation 420, a representation of the result is communicated. In an example, the representation of the result includes one or more of a representation of the bound with respect to the sensor data, a type of signal object detected, or a confidence score for the signal object detected. In an example, the representation of the bound includes a bounding box for two-dimensional data. In an example, when the confidence score indicates a problem with the signal object, the representation of the result includes a classification of the problem or a compressed representation of the sensor data within the bound.

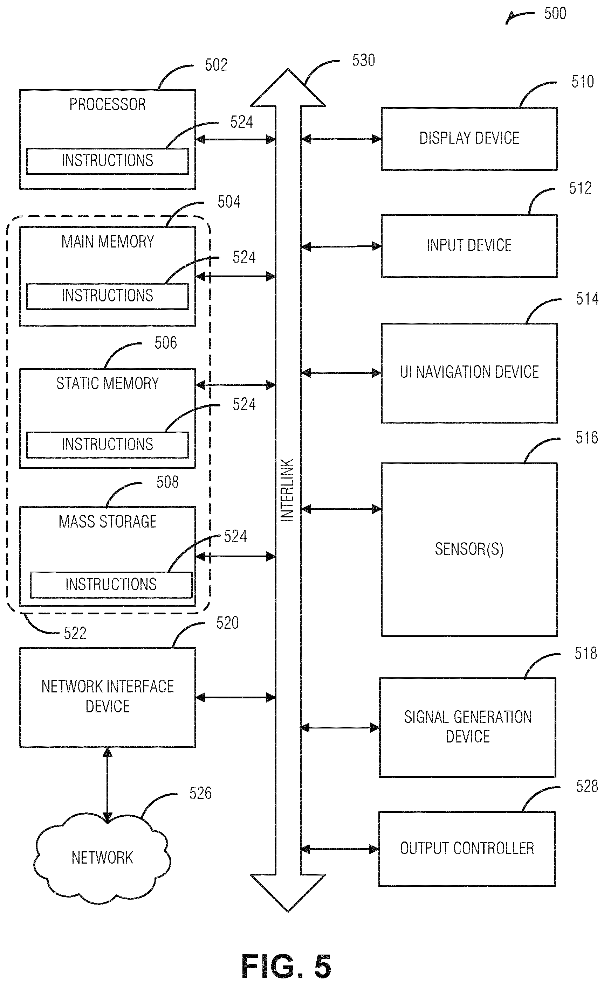

FIG. 5 illustrates a block diagram of an example machine 500 upon which any one or more of the techniques (e.g., methodologies) discussed herein may perform. Examples, as described herein, may include, or may operate by, logic or a number of components, or mechanisms in the machine 500. Circuitry (e.g., processing circuitry) is a collection of circuits implemented in tangible entities of the machine 500 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine-readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine-readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 500 follow.

In alternative embodiments, the machine 500 may operate as a standalone device or may be connected (e.g., networked) to other machines. In a networked deployment, the machine 500 may operate in the capacity of a server machine, a client machine, or both in server-client network environments. In an example, the machine 500 may act as a peer machine in peer-to-peer (P2P) (or other distributed) network environment. The machine 500 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 500 may include a hardware processor 502 (e.g., a central processing unit (CPU), a graphics processing unit (GPU), a hardware processor core, or any combination thereof), a main memory 504, a static memory (e.g., memory or storage for firmware, microcode, a basic-input-output (BIOS), unified extensible firmware interface (UEFI), etc.) 506, and mass storage 508 (e.g., hard drives, tape drives, flash storage, or other block devices) some or all of which may communicate with each other via an interlink (e.g., bus) 530. The machine 500 may further include a display unit 510, an alphanumeric input device 512 (e.g., a keyboard), and a user interface (UI) navigation device 514 (e.g., a mouse). In an example, the display unit 510, input device 512 and UI navigation device 514 may be a touch screen display. The machine 500 may additionally include a storage device (e.g., drive unit) 508, a signal generation device 518 (e.g., a speaker), a network interface device 520, and one or more sensors 516, such as a global positioning system (GPS) sensor, compass, accelerometer, or other sensor. The machine 500 may include an output controller 528, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 502, the main memory 504, the static memory 506, or the mass storage 508 may be, or include, a machine readable medium 522 on which is stored one or more sets of data structures or instructions 524 (e.g., software) embodying or utilized by any one or more of the techniques or functions described herein. The instructions 524 may also reside, completely or at least partially, within any of registers of the processor 502, the main memory 504, the static memory 506, or the mass storage 508 during execution thereof by the machine 500. In an example, one or any combination of the hardware processor 502, the main memory 504, the static memory 506, or the mass storage 508 may constitute the machine readable media 522. While the machine readable medium 522 is illustrated as a single medium, the term "machine readable medium" may include a single medium or multiple media (e.g., a centralized or distributed database, and/or associated caches and servers) configured to store the one or more instructions 524.

The term "machine readable medium" may include any medium that is capable of storing, encoding, or carrying instructions for execution by the machine 500 and that cause the machine 500 to perform any one or more of the techniques of the present disclosure, or that is capable of storing, encoding or carrying data structures used by or associated with such instructions. Non-limiting machine-readable medium examples may include solid-state memories, optical media, magnetic media, and signals (e.g., radio frequency signals, other photon-based signals, sound signals, etc.). In an example, a non-transitory machine-readable medium comprises a machine-readable medium with a plurality of particles having invariant (e.g., rest) mass, and thus are compositions of matter. Accordingly, non-transitory machine-readable media are machine readable media that do not include transitory propagating signals. Specific examples of non-transitory machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In an example, information stored or otherwise provided on the machine readable medium 522 may be representative of the instructions 524, such as instructions 524 themselves or a format from which the instructions 524 may be derived. This format from which the instructions 524 may be derived may include source code, encoded instructions (e.g., in compressed or encrypted form), packaged instructions (e.g., split into multiple packages), or the like. The information representative of the instructions 524 in the machine readable medium 522 may be processed by processing circuitry into the instructions to implement any of the operations discussed herein. For example, deriving the instructions 524 from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions 524.

In an example, the derivation of the instructions 524 may include assembly, compilation, or interpretation of the information (e.g., by the processing circuitry) to create the instructions 524 from some intermediate or preprocessed format provided by the machine readable medium 522. The information, when provided in multiple parts, may be combined, unpacked, and modified to create the instructions 524. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable etc.) at a local machine, and executed by the local machine.

The instructions 524 may be further transmitted or received over a communications network 526 using a transmission medium via the network interface device 520 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, peer-to-peer (P2P) networks, among others. In an example, the network interface device 520 may include one or more physical jacks (e.g., Ethernet, coaxial, or phone jacks) or one or more antennas to connect to the communications network 526. In an example, the network interface device 520 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 500, and includes digital or analog communications signals or other intangible medium to facilitate communication of such software. A transmission medium is a machine-readable medium.

### Additional Notes & Examples

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment.

## Claims

1. A method for vehicle-based measurement of signal object integrity, the method comprising:
obtaining, by processing circuitry of a vehicle, map data indicating a presence of a signal object at a corresponding location, wherein the signal object is a traffic sign, a light signal, or a road surface marking;
obtaining, by the processing circuitry of the vehicle, sensor data representing an environment of the vehicle, the sensor data originating from a sensor mounted to the vehicle, wherein the environment of the vehicle comprises a region which is expected to comprise the signal object at the corresponding location;
determining a bound based on the map data, the bound comprising a portion of the sensor data corresponding to the region of the environment;
determining a result using a classifier which is configured to output the result responsive to inputting the bound into the classifier, wherein the bound defines an area within the sensor data for input to the classifier, and wherein the result indicates a degradation of a signal ability of the signal object, the signal ability representing an integrity of the signal object; and
communicate, by a transmitter of the vehicle, the result of the classifier.

2. The method of claim 1, wherein the traffic sign is a stop sign, a yield sign, a speed limit sign, a street sign, or an exit sign.

3. The method of claim 1 or 2, wherein the result comprises a confidence score below a threshold.

4. The method of claim 3, wherein the classifier is a first classifier, the method further comprising: determining a type of the degradation using another classifier which is configured to output the type of the degradation responsive to inputting the bound into the second classifier.

5. The method of claim 4, wherein the second classifier is further configured to output a degree of the degradation.

6. The method of any of claims 4-5, wherein the degradation is at least one of occlusion, deformation, degradation of surface markings, absence of surface markings, or additional markings.

7. The method of any of claims 1-6, wherein the result includes:
a representation of the bound with respect to the sensor data;
a type of signal object detected; and
a confidence score for the signal object detected.

8. The method of claim 7, wherein the representation of the bound includes a bounding box for two-dimensional data.

9. The method of any of claims 7-8, wherein the confidence score indicates the degradation of the signal ability of the signal object, and wherein the result includes:
a classification of the degradation of the signal ability; or
a compressed representation of the sensor data within the bound.

10. At least one machine-readable medium including instructions that, when executed by a machine, cause the machine to perform any method of claims 1-9.

11. A system comprising means to perform any method of claims 1-9.

## Patentansprüche

1. Verfahren zur fahrzeugbasierten Messung einer Signalobjektintegrität, wobei das Verfahren Folgendes umfasst:
Erhalten, durch eine Verarbeitungsschaltung eines Fahrzeugs, von Kartendaten, die ein Vorhandensein eines Signalobjekts an einem entsprechenden Standort angeben, wobei das Signalobjekt ein Verkehrsschild, ein Lichtsignal oder eine Fahrbahnoberflächenmarkierung ist;
Erhalten, durch die Verarbeitungsschaltung des Fahrzeugs, von Sensordaten, die eine Umgebung des Fahrzeugs darstellen, wobei die Sensordaten von einem an dem Fahrzeug montierten Sensor stammen, wobei die Umgebung des Fahrzeugs ein Gebiet umfasst, von dem erwartet wird, dass es das Signalobjekt an dem entsprechenden Standort umfasst;
Bestimmen einer Begrenzung basierend auf den Kartendaten, wobei die Begrenzung einen Teil der Sensordaten umfasst, der dem Gebiet der Umgebung entspricht;
Bestimmen eines Ergebnisses unter Verwendung eines Klassifizierers, der dazu ausgelegt ist, das Ergebnis als Reaktion auf ein Eingeben der Begrenzung in den Klassifizierer auszugeben, wobei die Begrenzung einen Bereich innerhalb der Sensordaten zur Eingabe in den Klassifizierer definiert, und wobei das Ergebnis eine Verschlechterung einer Signalfähigkeit des Signalobjekts angibt, wobei die Signalfähigkeit eine Integrität des Signalobjekts darstellt; und
Kommunizieren, durch einen Sender des Fahrzeugs, des Ergebnisses des Klassifizierers.

2. Verfahren nach Anspruch 1, wobei das Verkehrsschild ein Stoppschild, ein Vorfahrt-gewähren-Schild, ein Geschwindigkeitsbegrenzungsschild, ein Straßenschild oder ein Ausfahrtsschild ist.

3. Verfahren nach Anspruch 1 oder 2, wobei das Ergebnis einen Konfidenzwert unterhalb einer Schwelle umfasst.

4. Verfahren nach Anspruch 3, wobei der Klassifizierer ein erster Klassifizierer ist, wobei das Verfahren ferner Folgendes umfasst: Bestimmen einer Art der Verschlechterung unter Verwendung eines anderen Klassifizierers, der dazu ausgelegt ist, die Art der Verschlechterung als Reaktion auf ein Eingeben der Begrenzung in den zweiten Klassifizierer auszugeben.

5. Verfahren nach Anspruch 4, wobei der zweite Klassifizierer ferner dazu ausgelegt ist, einen Grad der Verschlechterung auszugeben.

6. Verfahren nach einem der Ansprüche 4-5, wobei die Verschlechterung mindestens eines von Verdeckung, Deformation, Verschlechterung von Oberflächenmarkierungen, Fehlen von Oberflächenmarkierungen oder zusätzlichen Markierungen ist.

7. Verfahren nach einem der Ansprüche 1-6, wobei das Ergebnis Folgendes aufweist:
eine Darstellung der Begrenzung in Bezug auf die Sensordaten;
eine Art von detektiertem Signalobjekt; und
einen Konfidenzwert für das detektierte Signalobjekt.

8. Verfahren nach Anspruch 7, wobei die Darstellung der Begrenzung einen Begrenzungsrahmen für zweidimensionale Daten aufweist.

9. Verfahren nach einem der Ansprüche 7-8, wobei der Konfidenzwert die Verschlechterung der Signalfähigkeit des Signalobjekts angibt, und wobei das Ergebnis Folgendes aufweist:
eine Klassifizierung der Verschlechterung der Signalfähigkeit; oder
eine komprimierte Darstellung der Sensordaten innerhalb der Begrenzung.

10. Mindestens ein maschinenlesbares Medium, das Anweisungen aufweist, die, wenn sie von einer Maschine ausgeführt werden, die Maschine dazu veranlassen, ein Verfahren nach den Ansprüchen 1-9 durchzuführen.

11. System, das Mittel zum Durchführen eines Verfahrens nach den Ansprüchen 1-9 umfasst.

## Revendications

1. Procédé de mesure, à partir d'un véhicule, de l'intégrité d'un objet de signalisation, le procédé comprenant :
l'obtention, par des circuits de traitement d'un véhicule, de données cartographiques indiquant une présence d'un objet de signalisation à un emplacement correspondant, l'objet de signalisation étant un panneau de circulation, un feu de circulation, ou un marquage routier au sol ;
l'obtention, par les circuits de traitement du véhicule, de données de capteur représentant un environnement du véhicule, les données de capteur provenant d'un capteur monté sur le véhicule, l'environnement du véhicule comprenant une région qui devrait comprendre l'objet de signalisation à l'emplacement correspondant ;
la détermination d'une délimitation sur la base des données cartographiques, la délimitation comprenant une partie des données de capteur correspondant à la région de l'environnement ;
la détermination d'un résultat au moyen d'un classificateur qui est configuré pour délivrer le résultat en réponse à l'entrée de la délimitation dans le classificateur, la délimitation définissant une zone au sein des données de capteur à fournir en entrée au classificateur, et le résultat indiquant une dégradation de la capacité de signalisation de l'objet de signalisation, la capacité de signalisation représentant une intégrité de l'objet de signalisation ; et
la communication, par un émetteur du véhicule, du résultat du classificateur.

2. Procédé selon la revendication 1, dans lequel le panneau de circulation est un panneau stop, un panneau Cédez-le-passage, un panneau de limitation de vitesse, un panneau de rue, ou un panneau de sortie.

3. Procédé selon la revendication 1 ou 2, dans lequel le résultat comprend un score de confiance inférieur à un seuil.

4. Procédé selon la revendication 3, dans lequel le classificateur est un premier classificateur, le procédé comprenant en outre : la détermination d'un type de la dégradation au moyen d'un autre classificateur qui est configuré pour délivrer le type de la dégradation en réponse à l'entrée de la délimitation dans le deuxième classificateur.

5. Procédé selon la revendication 4, dans lequel le deuxième classificateur est configuré en outre pour délivrer un degré de la dégradation.

6. Procédé selon l'une quelconque des revendications 4 à 5, dans lequel la dégradation est au moins un élément dans le groupe constitué par une occultation, une déformation, une dégradation de marquages au sol, l'absence de marquages au sol, ou des marquages supplémentaires.

7. Procédé selon l'une quelconque des revendications 1 à 6, dans lequel le résultat comporte :
une représentation de la délimitation par rapport aux données de capteur ;
un type d'objet de signalisation détecté ; et
un score de confiance pour l'objet de signalisation détecté.

8. Procédé selon la revendication 7, dans lequel la représentation de la délimitation comporte une boîte englobante pour des données bidimensionnelles.

9. Procédé selon l'une quelconque des revendications 7 à 8, dans lequel le score de confiance indique la dégradation de la capacité de signalisation de l'objet de signalisation, et dans lequel le résultat comporte :
une classification de la dégradation de la capacité de signalisation ; ou
une représentation compressée des données de capteur au sein de la délimitation.

10. Support(s) lisible(s) par machine comportant des instructions qui, lorsqu'elles sont exécutées par une machine, amènent la machine à réaliser tout procédé selon les revendications 1 à 9.

11. Système comprenant des moyens pour réaliser tout procédé selon les revendications 1 à 9.
